# EUROPÄISCHE PATENTSCHRIFT

(11) **EP 0 501 186 B1**
(45) Veröffentlichungstag und Bekanntmachung des Hinweises auf die Patenterteilung: **24.05.1995**
(21) Anmeldenummer: 92101802.4
(22) Anmeldetag: 04.02.1992
(51) Int. Cl.: G01L 7/04

(54) **Rohrfedermanometer mit Überlastsicherung**
Bourdon pressure gauge with overload protection
Capteur de pression Bourdon à protection de surcharge

(30) Priorität: 04.02.1991 DE 9101239 U
(43) Veröffentlichungstag der Anmeldung: 02.09.1992
(73) Patentinhaber: WIKA ALEXANDER WIEGAND GmbH & CO., D-63911 Klingenberg (DE)
(72) Erfinder: Klein, Kurt, W-8763 Klingenberg 2 (DE); Wahl, Detlef, W-8765 Erlenbach (DE); Krejtschi, Joachim, W-8762 Amorbach (DE); Schneider, Klaus, W-8763 Klingenberg (DE)
(74) Vertreter: Tiedtke, Harro, Dipl.-Ing.

(56) Entgegenhaltungen:
- DE-A- 2 433 923
- US-A- 3 857 288

## Beschreibung

Die Erfindung betrifft Rohrfedermanometer, welche zum erhöhten Schutz ihrer unmittelbaren Umgebung beim Bersten des kreisförmigen Rohrfedermeßgliedes infolge zu hohen Druckes mit einer Überlastsicherung ausgestattet sind.

Eine aus der US-Patentschrift 3,857 288 bekannte Bauart ist ein Rohrfedermanometer mit einem oberhalb der Anschlußeinrichtung befindlichen und direkt mit dem Druckanschlußkanal verbundenen Berstventil, bei welchem bei auftretendem Überdruck eine runde gewölbte, mit Sollbruchstellen versehene dünne Metallmembrane zu Bruche geht.

Diese Lösung hat den Nachteil, daß Soll- und Ist-Berstdruck dieser Rohrfedermanometer auf Grund Von Materialstärke- bzw. metallurgischen Unterschieden der Metallmembrane oder auch infolge von Verunreinigungen und Rückständen vom Druckmedium her -, zu stark streuen.

Aus der deutschen Offenlegungsschrift 24 33 923 ist ein Rohrfedermanometer bekannt, bei dem an der Oberseite der Rohrfeder in Querrichtung eine Nut als Soll-Berststelle angebracht ist.
Bei dieser Bauweise wird eine Verschlechterung der meßtechnischen Eigenschaften und der Lebensdauer bewußt in Kauf genommen.

Eine genaue Einstellung des gewünschten Soll-Berstdruckes ist auch hier nicht möglich.

Der gewerblichen Schutz beanspruchenden Erfindung liegt das Problem zugrunde, ein Rohrfedermanometer mit einer derartigen Überlastsicherung zu schaffen, daß noch bevor das Rohrfedermeßglied seinen gefährlichen Berstdruck erreicht, ein kontrollierter Druckabbau des Meßstoffes erfolgt. Dieses Problem wird mit den Maßnahmen des Anspruches 1 gelöst.

Mit der Erfindung wird im angegebenen Anwendungsfall erzielt, daß unmittelbar nach Überschreiten der Streckgrenze des Rohrfedermeßgliedes bei noch relativ niedriger Energie eine begrenzte Menge austretenden Meßstoffes in eine sichere Richtung abgeleitet wird.

Vorteilhafte Ausgestaltungen der Erfindung sind in den Ansprüchen 2 bis 3 angegeben.
Die Weiterbildung nach Anspruch 2 gewährleistet, daß keine Deformation des Rohrfedermeßgliedes zur Anzeigerichtung hin erfolgt.

Die Ausgestaltung nach Anspruch 3 vereinfacht die Montage des Berst-Formstückes und gewährleistet gleiche Positionierung der scharfkantigen Spitze bei der Serienfertigung dieser Geräte.

Ein Ausführungsbeispiel der Erfindung wird anhand der Figuren 1 bis 4 erläutert. Es zeigen:
- Fig. 1: ein Rohrfedermanometer mit der Kennzeichnung der Lage der Überlastsicherung,
- Fig. 2: einen Querschnitt des Rohrfedermeßgliedendes mit dem Berst-Formstück,
- Fig. 3: eine Draufsicht des Rohrfedermeßgliedendes mit dem Berst-Formstück,
- Fig. 4: eine Seitenansicht des Rohrfedermeßgliedendes mit dem Berst-Formstück.

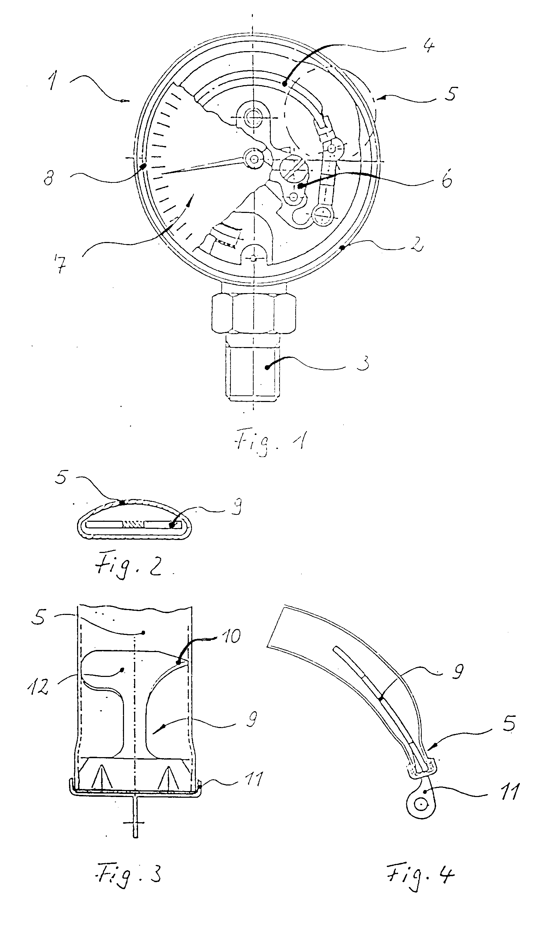

Aus Fig. 1 ist zu erkennen, daß sich die Überlastsicherung ohne Veränderung der bekannten Bestandteile eines Rohrfedermanometers integriert. Sie wirkt unmittelbar dort, wo infolge Druckeinwirkung eine mechanische Reaktion erfolgt, d.h. innerhalb des Rohrfedermeßgliedes 4, das ein Aufblähen des ursprünglich halbellipsenförmigen Querschnittes erfährt. Das Berst-Formstück 9 liegt, wie aus Fig. 2 zu entnehmen ist, in der Querschnitt-Längsachsen-Ebene des Rohrfedermeßgliedes 4 und ist zusammen mit dem Endstück 11 in dem sich verjüngenden Rohrfederende 5 verlötet. Die Distanz zwischen der Innenfläche des Rohrfedermeßgliedes 4 und der scharfkantigen Spitze 10 und deren gegenüberliegendem abgerundetem Ende 12 bleibt bis zur Streckdruckgrenze des Rohrfedermeßgliedes 4 erhalten. Erst nach weiterer Drucküberhöhung und resultierender Querschnitt-Längsachsen-Verkürzung des Rohrfedermeßgliedes 4 stützt sich das abgerundete Ende 12 des Berst-Formstückes 9 an der Innenfläche des Rohrfedermeßgliedes 4 ab, während seine scharfkantige Spitze 10 die von der Anzeigerichtung 7 abgewandte Wandung des Rohrfedermeßgliedes 4 durchstößt.
Über die so entstandene kleine Öffnung erfolgt ein sicherer kontinuierlicher Druckabbau bei geringem Meßstoffausfluß.

Bei einem Rohrfedermanometer mit einer kreisförmigen Rohrfeder als Meßglied ist im Inneren des Rohrfederendes in dessen Querschnitt-Längsachsen-Ebene ein Berst-Formstück (9) mit einer von der Sichtscheibe (8) des Rohrfedermanometers abgewandten, scharfkantigen Spitze (10) vorgesehen, die im Winkel von 90° zum Biegeradius der kreisförmigen Rohrfeder (4) ausgebildet ist. Diese Spitze durchstößt die Wandung der Rohrfeder (4) vor Erreichen von deren Berstdruck, so daß bei noch relativ niedriger Energie eine begrenzte Menge des Meßstoffes austreten und in eine sichere Richtung abgeleitet werden kann.

## Patentansprüche

1. Rohrfedermanometer mit Überlastsicherung (1) bestehend aus einem Gehäuse (2) mit Anschlußeinrichtung (3) zum Anschließen an das zu überprüfende Gerät und zum Einleiten des zu messenden Druckes, einem kreisförmigen Rohrfedermeßglied (4), das in Abhängigkeit des eingeleiteten Druckes eine Lageänderung ausführt, welche auf ein mit dem Rohrfederende (5) des kreisförmigen Rohrfedermeßgliedes (4) gelenkig verbundenes Meßgetriebe (6) mit Anzeigeeinrichtung (7) übertragen wird und einer dicht in das Gehäuse (2) eingesetzten Sichtscheibe (8), durch welche die Stellung der Anzeigeeinrichtung beobachtbar ist, dadurch gekennzeichnet, daß sich im Inneren des Rohrfederendes (5) in dessen Querschnitt-Längsachsen-Ebene ein Berst-Formstück (9) mit einer von der Sichtscheibe (8) abgewandten und im Winkel von 90 Grad zum Biegeradius des kreisförmigen Rohrfedermeßgliedes (4) ausgebildeten scharfkantigen Spitze (10) befindet, welches zusammen mit dem Endstück (11) im Rohrfederende (5) verbunden ist.

2. Rohrfedermanometer mit Überlastsicherung nach Anspruch 1, dadurch gekennzeichnet, daß das gegenüberliegende Ende (12) der scharfkantigen Spitze (10) des Berst-Formstückes (9) eine glatte abgerundete Kontur besitzt.

3. Rohrfedermanometer mit Überlastsicherung nach Anspruch 1 und 2, dadurch gekennzeichnet, daß das Endstück (11) und das Berst-Formstück (9) aus einem Formteil bestehen.

## Claims

1. Bourdon pressure gauge with overload protection (1), consisting of a housing (2) with a connection device (3) for connection to the apparatus to be tested and for introduction of the pressure to be measured; of a circular Bourdon measuring element (4) which, in dependence on the pressure introduced, carries out a change in position which is transmitted to a measuring transmission (6), connected in an articulated manner to the Bourdon-tube end (5) of the circular Bourdon measuring element (4) with a display device (7); and of a window (8) which is inserted tightly in the housing (2) and through which the position of the display device can be observed; characterized in that a bursting shaped piece (9) with a sharp-edged tip (10), facing away from the window (8) and constructed at an angle of 90 degrees to the radius of curvature of the circular Bourdon measuring element (4), is located inside the Bourdon-tube end (5) in the plane of its cross-sectional longitudinal axis, which shaped piece (9) is joined together with the end piece (11) in the Bourdon-tube end (5).

2. Bourdon pressure gauge with overload protection according to Claim 1, characterized in that the opposite end (12) of the sharp-edged tip (10) of the bursting shaped piece (9) has a smooth rounded contour.

3. Bourdon pressure gauge with overload protection according to Claims 1 and 2, characterized in that the end piece (11) and the bursting shaped piece (9) consist of one moulding.

## Revendications

1. Manomètre à tube déformable équipé d'une sécurité de surcharge (1), composé d'un boîtier (2) doté d'un dispositif de raccordement (3), pour raccorder à un appareil à contrôler et pour introduire la pression à mesurer, avec un organe de mesure à tube déformable de forme circulaire (4), subissant en fonction de la pression introduite une modification de position, qui est transmise à un mécanisme de mesure (6) à dispositif d'affichage (7) et relié de façon articulée à l'extrémité du tube déformable (5) de l'organe de mesure à tube ressort circulaire (4), et avec un cadran d'observation (8), inséré de façon étanché dans le boîtier (2) et au moyen duquel la position du dispositif d'affichage peut être observée, caractérisé en ce qu'à l'intérieur de l'extrémité du tube déformable (5) se trouve, dans son plan de grand axe de section transversale, une pièce de forme d'éclatement (9), ayant une pointe (10) à arêtes vives, opposée au cadran d'observation (8) et faisant un angle de 90 degrés par rapport au rayon de courbure de l'organe de mesure à tube déformable circulaire (4), qui est relié à la pièce d'extrémité (11), dans l'extrémité du tube déformable (5).

2. Manomètre à tube déformable selon la revendication 1, caractérisé en ce que l'extrémité (12) opposée de la pointe (10) à arête vives de la pièce de forme d'éclatement (9) a un contour lisse et arrondi.

3. Manomètre à tube déformable selon les revendications 1 et 2, caractérisé en ce que la pièce d'extrémité (11) et la pièce de forme d'éclatement (9) sont réalisés d'un seul tenant, de moulage.
